(19) **Europäisches Patentamt / European Patent Office / Office européen des brevets**

(11) **EP 4 538 426 A1**

(12) **EUROPEAN PATENT APPLICATION**

(43) Date of publication:
16.04.2025 Bulletin 2025/16

(21) Application number: 23315388.1

(22) Date of filing: 13.10.2023

(51) International Patent Classification (IPC):
$C25B\ 1/04^{(2021.01)}$     $C25B\ 9/60^{(2021.01)}$
$C25B\ 9/75^{(2021.01)}$     $C25B\ 9/77^{(2021.01)}$
$C25B\ 15/08^{(2006.01)}$

(52) Cooperative Patent Classification (CPC):
C25B 15/08; C25B 1/04; C25B 9/60; C25B 9/75;
C25B 9/77

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
- **McPhy Energy**
  **90150 Foussemagne (FR)**
- **Université de Florence**
  **50139 Firenze (IT)**

(72) Inventors:
- **NEBEN, Matthias**
  **38100 GRENOBLE (FR)**
- **FERRO, Francesco Maria**
  **38100 GRENOBLE (FR)**
- **HOSSAIN, Syed Sahil**
  **38100 GRENOBLE (FR)**
- **BIANCHINI, Alessandro**
  **50139 FIRENZE (FR)**
- **BALDUZZI, Francesco**
  **50139 FIRENZE (FR)**

(74) Representative: **IP Trust**
**2, rue de Clichy**
**75009 Paris (FR)**

Remarks:
Amended claims in accordance with Rule 137(2) EPC.

(54) **FLOW DISTRIBUTOR CONFIGURED TO HOMOGENEOUSLY DISTRIBUTE REACTANTS INTO AN ELECTROLYTIC CELL, CELL FRAME INCLUDING THE SAME, AND ELECTROLYZER COMPRISING THE CELL FRAME**

(57) A flow distributor ($FD_1$) for an electrolytic cell, comprising a distribution chamber (DC); an inner wall (InW) to separate the distribution' chamber (DC) from an active area (AA) of the electrolytic cell and comprising a plurality of channels (CH) for flow reactant from the distribution chamber (DC) to the active area (AA); the distribution chamber (DC) being interposed between an outer wall and the inner wall (InW) of the flow distributor; and a duct (DUC) to bring a reactant to the distribution chamber (DC) through the outer wall, the flow distributer ($FD_1$) comprising a flow inducer (IND) extending from the inner wall (InW) to an inside portion of the duct (DUC), separating the distribution chamber (DC) into a left-hand side distribution chamber (LHS-DC) and a right-hand side distribution chamber (RHS-DC), and forming a wall separating the duct (DUC) into two sides (RHS-DUC, LHS-DUC).

Fig. 9

EP 4 538 426 A1

**Description**

**FIELD OF THE INVENTION**

The technical domain of the invention is that of apparatuses designed to perform electrochemical reactions, such as alkaline water electrolysis for the production of hydrogen, and more specifically on the geometry of a flow distributor through which reactants are brought to an active area of an electrochemical cell.

**BACKGROUND OF THE INVENTION**

Hydrogen ($H_2$) is an energy vector that is gathering a lot of attention due to its potential to be produced in an environment-friendly manner and to support the emergence of low-carbon emission industrial processes and transportation means.

As for hydrogen production, electrochemical water splitting is a well-known approach that is sustainable and pollution-free.

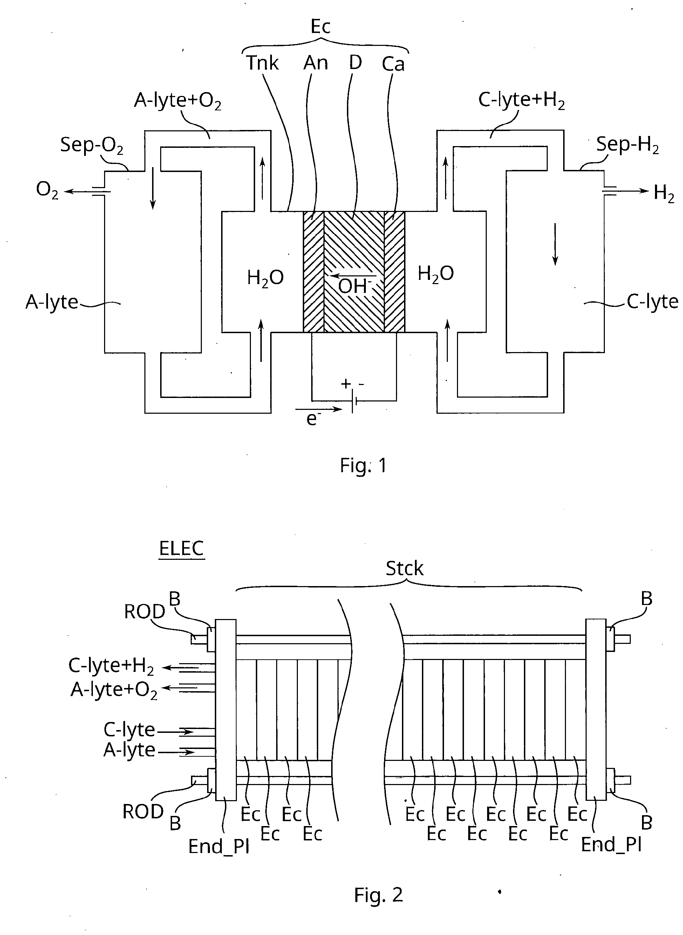

This approach can be implemented by alkaline water electrolysis, in which electrolysis of water $H_2O$ is performed by flowing a direct current of electrons e- between an anode An and a cathode Ca immersed in an aqueous alkaline electrolyte, as illustrated in Figure 1, that shows the principle of use of a conventional electrolytic cell Ec containing these elements in a tank Tnk.

At the cathode, electrons provided by the direct current react with water to produce hydrogen gas and hydroxide ions according to the reaction:

$$2H_2O + 2e^- \rightarrow 2H_2 + 2OH^-$$

At the anode, the hydroxide ions release their electrons in excess to produce water and oxygen gas according to

$$2OH^- \rightarrow \frac{1}{2}O_2 + H_2O + 2e^-$$

the reaction:

These electrodes are separated by a thin, porous foil commonly referred to as diaphragm D, that is a separator nonconductive to electrons, separating the product gases and letting hydroxide ions (OH-) pass from the cathode side to the anode side.

Ionic conductivity is supplied by the aqueous alkaline electrolyte, usually an aqueous solution of potassium hydroxide (KOH) or sodium hydroxide (NaOH). As illustrated in Figure 1, in a conventional implementation of alkaline hydrolysis, two fluidic circuits separated by the diaphragm D are employed, one comprising the anode An and the other one comprising the cathode Ca. The electrolyte bathing the anode is designated as "anolyte" (A-lyte in the figure), and the electrolyte bathing the cathode is designated as "catholyte" (C-lyte in the figure). It is preferable to prevent mixing between the anolyte and the catholyte to keep the product gases $O_2$ and $H_2$ as pure as possible.

The mix comprising the anolyte A-lyte and produced oxygen gas $O_2$ is pumped out of the cell and goes through a first gas-liquid separator Sep-$O_2$ where the oxygen gas $O_2$ is separated from the anolyte A-lyte. The oxygen gas is then retrieved separately, and the anolyte sent into an anolyte tank A-Tnk before being circulated again through the tank Tnk of the cell Ec.

Symmetrically, the mix comprising the catholyte C-lyte and produced hydrogen gas $H_2$ is pumped out of the cell and goes through a second gas-liquid separator Sep-$H_2$ where the hydrogen gas $H_2$ is separated from the catholyte C-lyte. The hydrogen gas is then retrieved separately and the catholyte sent into a catholyte tank C-Tnk before being circulated again through the tank Tnk of the cell Ec.

For the production of hydrogen at an industrial scale, stacks Stck that can be made of several hundreds of electrolytic cells, similar in their working principle to that of Figure 1, are employed.

Figure 2 illustrates an electrolyzer ELEC integrating a stack Stck made of a plurality of Electrolytic cells Ec forming each. These electrolytic cells Ec are stacked and sandwiched by two end plates End_Pl clamped by a plurality bolts B mounted onto threaded rods ROD. Inlets main channels In-$MC_1$ In-$MC_2$, are to be input with the anolyte A-lyte and the catholyte C-lyte, respectively, while the output main channel InOut-$MC_1$ outputs the anolyte A-lyte and oxygen gas $O_2$ and the output main channel Out-$MC_2$ outputs the catholyte C-lyte and hydrogen gas $H_2$. Although not represented in Figure 2, negative and positive current collectors can be placed on respective sides of the stack Stck for electrically connecting the stack to the outside.

In the example of this figure 2, the anolyte and catholyte are introduced on one side of the stack Stck, at the level of a first end plate End_pl. The anolyte A-lyte and oxygen gas $O_2$ and the catholyte C-lyte and hydrogen gas H are evacuated at the same side of the stack Stck. In this configuration, the second end plate or any interposed device is configured to fluidly connect the inlets main channels In-MC$_1$, In-MC$_2$ of the last cell ECell to the output main channel InOut-MC$_1$, InOut-MC$_2$ of this cell. In this configuration, the end plate is electrically grounded.

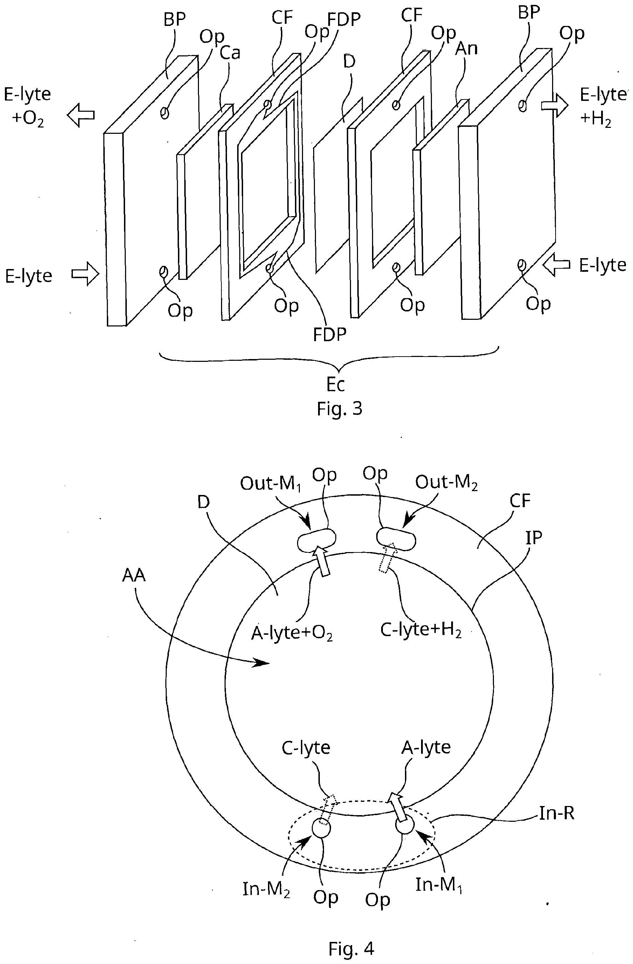

Figure 3 illustrates the constitution of a conventional electrolytic cell Ec forming a base element of the stack Stck of figure 2: each electrolytic cell Ec comprises a bipolar plate BP in addition to an anode catalyst An, a cathode catalyst Ca and a diaphragm D; cell frames CF are used to maintain together the other elements. The anode and the cathode can be formed from the catalyst layers in direct contact with the diaphragm. The bipolar plates are electrically conductive, are shared by two adjacent cells and separate physically these two adjacent cells while providing electrical continuity between them by transporting electrons from one cell to the next one. Electrolytic cells may optionally comprise porous transport layers interposed between the bipolar plates and the next ones of the anodes and/or the cathodes of a stack Stck. In the example illustrated by Figure 3, the anolyte and the catholyte are not separated, and are instead mixed as a single electrolyte E-lyte. Also, the elements forming the cell are rectangularly shaped in this example, but any kind of closed shape may be employed.

The reactants must be brought to each of the individual electrolytic cells Ec from the exterior of the stack and distributed to their respective active areas. This is performed by the means of through openings OP crossing through the thicknesses of the cell frames and the bipolar plates (or through the thickness of one or several frames holding these elements) to form manifolds extending in a stacking direction of the stacked electrolytic cells.

The frames are configured so that so that corresponding through openings face one another, thus forming the manifolds that fluidically connect the cells of a stack of cells to one another and to the exterior of the stack: Figure 4 illustrates, for the configuration of Figure 1 and Figure 2 with a circular geometry, a cell frame CF with openings forming inlet manifolds In-M$_1$ and In-M$_2$ configured to bring the reactants (anolyte and catholyte) to a cell and outlet manifolds Out-M$_1$ and Out-M$_2$ configured to collect remaining reactant (anolyte and catholyte) and reaction products (anolyte and O$_2$, catholyte and H$_2$) from this cells.

The continuous arrows illustrate the flow of anolyte from the inlet manifold In-M1 and the flow of anolyte A-lyte and remaining anolyte A-lyte and produced oxygen O$_2$, above the diaphragm D in the figure. The dotted arrows illustrate the flow of catholyte C-lyte from the inlet manifold In-M2 and the flow of catholyte C-lyte and remaining catholyte A-lyte and produced hydrogen H$_2$, below the diaphragm D in the figure.

One may refer to the patents US 6,852,205 B1 and US 6,117,287, that describe means to let flow the reactants and reaction products between the active area of the cell and their respective manifolds.

In this respect, and although not represented on the figures, the cell frame CF may present grooves aimed at operating a distribution of the reactants on both sides of the diaphragm D, between the manifolds and the active area of the cell. These grooves are located between the inlet manifolds and the active area of a cell to distribute the reactant to the active area of the cell, and between this active area and the outlet manifolds to collect remaining reactant and reaction products from the active area. One may refer to the patent EP 3 696 298 A1.

However, there is still a need to better homogenize the flows of reactants at the active area of an electrochemical cell.

## SUMMARY OF THE INVENTION

In view of the need described above, the applicant studied various geometries of an element distributing the reactants of an electrochemical cell into the active area of this cell, and determined a technical solution bringing a high homogeneity to the flow distribution through the active area of the cell.

A first aspect of the invention relates to a flow distributor configured to be part of an electrolytic cell, the flow inducer comprising: an elongated distribution chamber ; an inner wall configured to separate the distribution chamber from an active area of the electrolytic cell , the inner wall comprising a plurality of channels configured to let flow some reactant from the distribution chamber to the active area ; an outer wall, the distribution chamber being interposed between this outer wall and the inner wall ; and a duct configured to bring a reactant to the distribution chamber through the outer wall, the flow distributer further comprising a flow inducer extending from the inner wall to an inside portion of the duct, separating the distribution chamber into a left-hand side distribution chamber and a right-hand side distribution chamber, and forming a wall separating the duct into two sides.

A primary advantage of this device is its ability to homogenize the flow of reactant of an electrochemical cell when it is properly integrated into an electrolytic cell.

Thanks to a more homogenous flow, the efficacy of a cell, and hence of an entire stack of such cells, can be improved, meaning a higher yield of the desired product, hydrogen in the case of water electrolysis.

According to further non-imitative features of the first aspect of the invention, either taken alone or in any technically feasible combination:

- the duct can comprise a first portion, a second portion that is a straight portion ending into the distribution chamber, and a bent portion linking the first portion to the second portion, and the flow inducer can extend to the first portion through the second portion and the bent portion;
- the first portion can be a straight portion;
- the first portion can be oriented so as to make some reactant flow in a direction driving the reactant away from the distribution chamber toward the outer wall.

A second aspect of the invention is a cell frame configured to be part of an electrolytic cell, comprising: an opening to form an inlet manifold; and a distribution channel configured to bring some reactant from the inlet manifold toward an inner periphery of the cell frame, the cell frame being equipped with the flow distributor according to the first aspect of the invention, arranged so as to bring the reactant from the distribution channel to the distribution chamber through the duct.

The distribution channel can be formed at a given depth within the cell frame.

A third aspect of the invention is an electrolyzer comprising a stack of electrolytic cells each having a cell frame according to the second aspect of the invention.

## FIGURES

Features and advantages of the present invention will become apparent from reading the following detailed description, when considered in conjunction with the accompanying drawings, in which:

- . Figure 1 illustrates a conventional water splitting electrolytic cell equipped with electrolyte recirculation;
- Figure 2 illustrates a stack of electrolytic cell forming an electrolyzer;
- Figure 3 illustrates a conventional structure of an electrolytic cell to be stacked to form an electrolyzer;
- Figure 4 illustrates a top view of a particular cell frame;
- Figure 5 illustrates a detail of a cell frame of an embodiment of the present invention;
- Figure 6 represents a perspective view of a cell frame equipped with a flow distributor;
- Figure 7 is a top view of the flow distributor of Figure 6;
- Figure 8 represents a detail of the flow distributor of Figure 7; and
- Figure 9 illustrates a detail of the flow distributor according to an embodiment of the present invention;
- Figure 10 represents results of a flow simulation in an electrolytic cell based on the geometry of the cell frame of Figure 6, equipped-with a flow distributor;
- Figure 11 represents results of a flow simulation in an electrolytic cell based on the geometry of the cell frame of Figure 6, equipped with a flow distributor according to the embodiment of the present invention illustrated by Figure 9.

## DETAILED DESCRIPTION OF A SPECIFIC EMBODIMENT OF THE INVENTION

The present invention is described and explained hereunder with the help of figures 1 to 11. For the sake of readability of the figures, some elements are represented on some of the figures only.

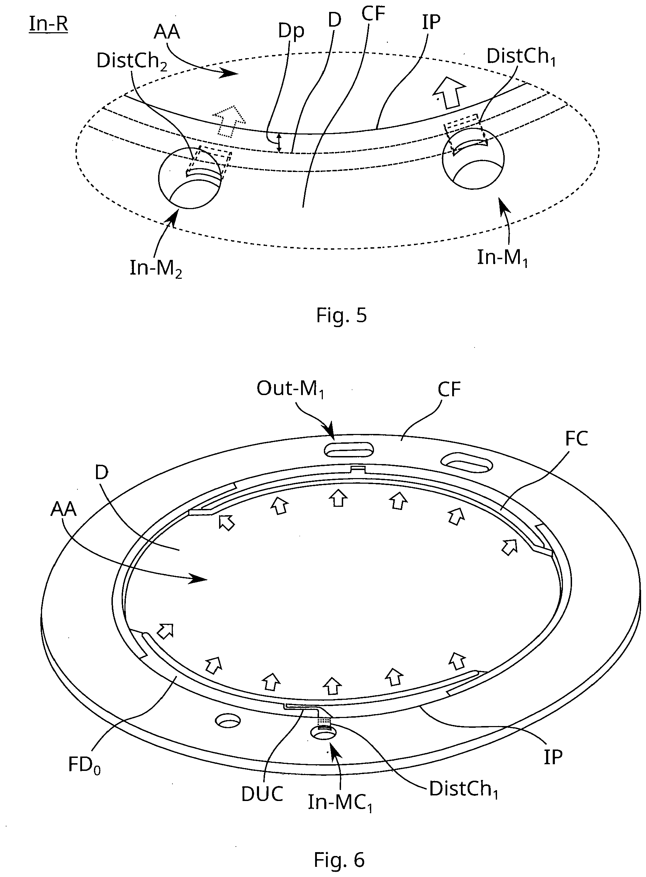

Figure 5 illustrates a inlet region In-R of a cell frame CF such as the one illustrated by Figure 4, comprising openings Op configured to form inlet manifolds $In\text{-}M_1$ and $In\text{-}M_2$ configured to bring the reactants (anolyte and catholyte) to a cell of which the cell frame CF is part. Distribution channels $DistCh_1$ and $DistCh_2$ are formed within the cell frame CF, each between a respective one of the inlet manifolds $In\text{-}M_1$ and $In\text{-}M_2$ and an inner periphery IP of the cell frame, substantially in parallel with a plane defined by the cell frame taken as a whole. The two distribution channels are formed at two different depths in the frame cell, so that, when the cell frame CF is mounted so as to form a functional electrolytic cell, a diaphragm D is arranged within this frame at a depth Dp intermediate between the depths of formation of these two distribution channels. Thus, the inlet manifolds $In\text{-}M_1$ and $In\text{-}M_2$ and the respectively associated distribution channels $DistCh_1$ and $DistCh_2$ bring reactants to opposite sides of the diaphragm D.

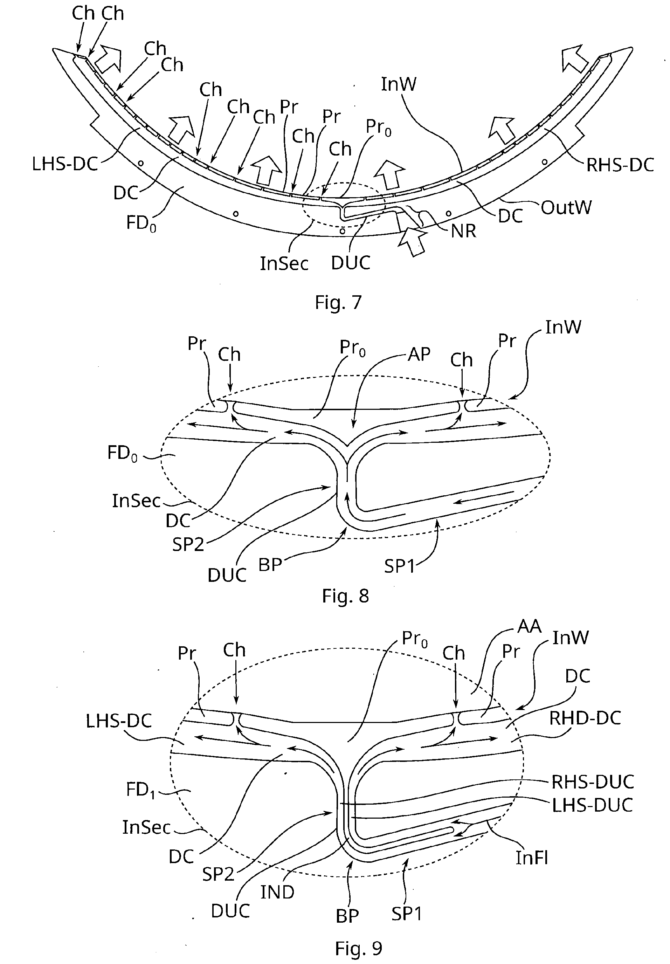

Figure 6 represents a general view of a cell frame CF equipped with a flow distributor $FD_0$ at the inlet side and a flow collector FC at the outlet side of the cell frame CF, respectively. The elements FD and CF can be affixed to the cell frame by any conventional means, such as screws. The flow distributor and the flow collector have both for purpose to improve the homogeneity of the reactant flow within the active area of an electrolytic cell. However, the present invention concerns the flow distributor $FD_0$, and the description will thus focus on this element, described in higher details in Figure 7.

Figure 7 illustrates the flow distributor $FD_0$, with an elongated distribution chamber DC, arranged to follow, or to run substantially parallel to, the inner periphery IP of the cell frame CF when affixed thereto. An inner wall InW of the flow distributor $FD_0$, intended to separate the distribution chamber from an active area AA of an electrolytic cell, comprises a plurality of channels CH distributed over a length of the distribution chamber. One can describe the inner wall as being formed by an alignment of island-shaped projections indicated as Pr and $Pr_0$ on Figure 7, two consecutive projections being separating by a gap forming one of said channels. An outer wall OutW of the flow distributor is arranged to be adapted to the inner periphery IP of a cell frame CF.

The flow distributor $FD_0$ comprises a duct DUC designed to fluidically connect the -distribution chamber DC to an opening forming an inlet manifold via a distribution channel. In the example illustrated by figures 5, 6 and 7, the distribution chamber DC is to be connected to the inlet manifold $In\text{-}MC_1$ through the distribution channel $DistCh_1$. The exit of the duct DUC faces the projection $PR_0$, that comprises a protrusion forming an apex AP directed toward the exit of the duct DUC and is configured to separate incoming flow into two equal sub-flows, respectively redirected toward a left-hand side LHS-DC and a right-hand side RHS-DC of the distribution chamber DC.

Figure 8 shows a magnification of an inlet section InSec of the flow distributor $FD_0$, with some details of the duct DUC: going from the outer wall OutW of the flow distributor $FD_0$ to the distribution chamber, it comprises a narrowing section NR (see Figure 7) leading to a first straight portion SP1 having an orientation towards the outer wall OutW and then to a second straight portion SP2 leading towards the apex AP of the projection Pr0. The first straight portion SP1 and the second straight portion SP2 are connected by a bent portion BP. In this embodiment, the first portion SP1 is oriented so as to flow the reactant in a direction driving the reactant away from the distribution chamber DC before the bent portion BP redirect this reactant toward the distribution chamber DC through the second straight portion SP2. The second straight portion is preferably straight to help distributing the reactant symmetrically between the left-hand side and the right-hand side of the distribution chamber.

The flow distributor $FD_0$ is preferably made from an electrically insulating material such as a polymer, to limit the risk of shorting the electrodes and to maintain the cost low as compared to metal-based frames and rings. In any case, the material used preferably resists to the pressure, temperature and chemical environment of the hydrogen electrolysis process. Therefore, it is preferable that the flow distributor resist to pressure as high as 120 bars, temperatures up to 120°C, and to alkaline environments, the electrolyte being typically alkaline KOH- or NaOH-based solutions.

Hence, the flow distributor may be made of a material conventionally used to form cell frames for water electrolyzer, such as polysulfones and polyphenylene sulphide. These polymers can comprise glass fiber, for example so as to have glass fiber contents comprised between 10% and 30%, preferably between 15% and 25%, by weight. The flow distributor can be formed by injection molding and CNC (Computer Numerical Control) milling.

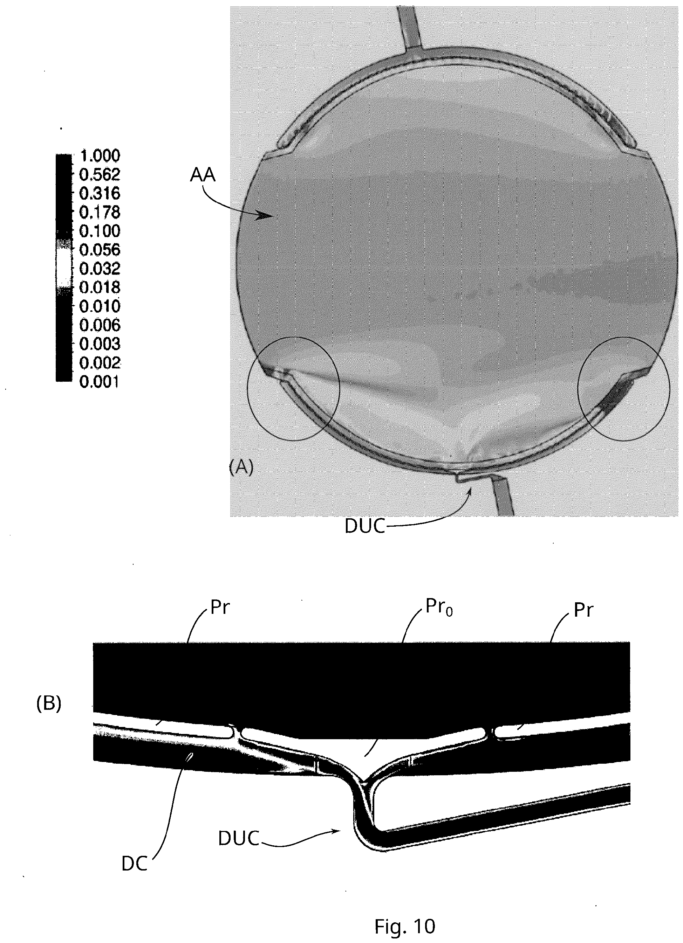

Figure 10 represents results of a flow simulation in an electrolytic cell based on the geometry of the cell frame of Figure 6, equipped with a flow distributor $FD_0$ of figures 7 and 8. The scale represents phase velocity of a fluid flowing through the electrolytic cell, between 0.001 and 1.000 m.s$^{-2}$. At (A), a general view of the active area is represented, showing a visibly non-symmetrical flow distribution between a left-hand side and a right-hand side of the cell. The imbalance is particularly visible if one compares the two circled regions, with a much lower phase velocity in the distribution chamber on the right-hand side than on the left-hand side. At (B), the input section InSect is magnified, and we can see that the flow is already inhomogeneous inside of the duct DUC.

Figure 9 illustrates an input section InSec of an enhanced flow distributor $FD_1$. The flow distributor $FD_1$ is similar to the flow distributor $FD_0$, so that the description made so far of the flow distributor $FD_0$ applies to the flow distributor $FD_1$, at the exception of the following point: instead of forming the apex AP directed toward the exit of the duct DUC, a protrusion of the projection $PR_0$ extends to form a flow inducer IND, that is a wall extending from the distribution chamber into an inside portion of the duct DUC, in this example into the first straight portion SP1 of the duct DUC, arranged so that a flow InFl of reactant incoming from the narrowing portion NR is separated into two portions as illustrated in Figure 9, preferably having sensibly equal flow rates. The flow inducer IND extends over a length of the first straight portion SP1, separating the duct DUC into a right-hand side RHS-DUC and a left-hand side LHS-DUC of the duct DUC. Also, in effect, the distribution chamber DC is made of a left-hand side distribution chamber LHS-DC and a right-hand side distribution chamber RHS-DC, respectively to be fed with reactant by the left-hand side LHS-DUC and the right-hand side RHS-DUC of the duct DUC.

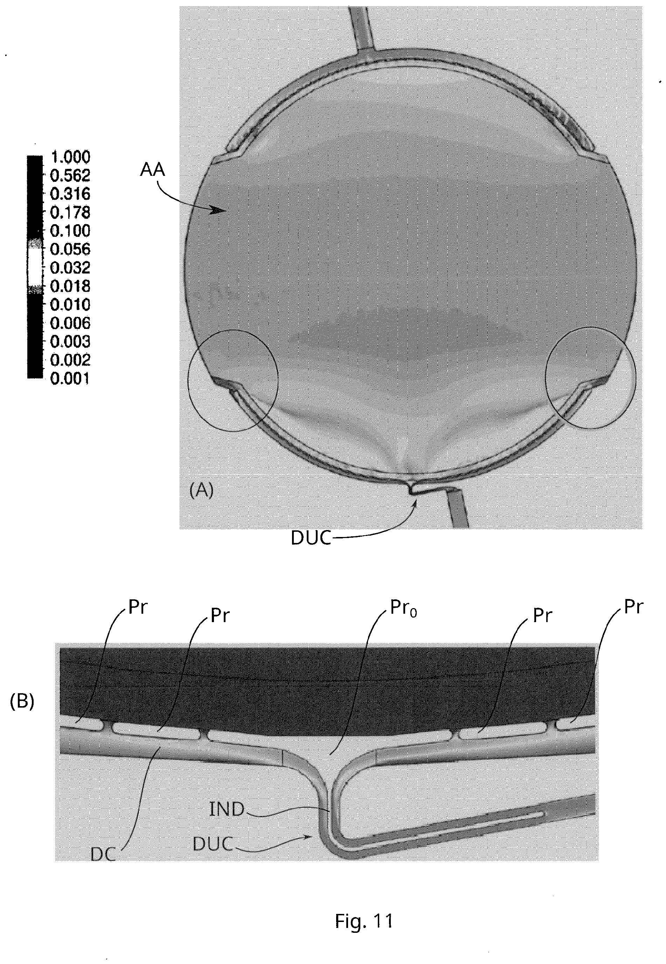

Figure 11 represents results of a flow simulation in an electrolytic cell based on the geometry of the cell frame of Figure 6, equipped with a flow distributor $FD_1$ of figures 7 and 9. The scale represents phase velocity of a fluid flowing through the electrolytic cell, between 0.001 and 1.000 m.s$^{-2}$. At (A), a general view of the active area is represented, showing a substantially symmetrical flow distribution between a left-hand side and a right-hand side of the cell. The imbalance that was highlighted in the circle portions of Figure 10 has been substantially reduced if not totally suppressed. At (B), the input section InSect is magnified, and we can see that the flow is already symmetric inside of the duct DUC.

Since the only parameter having changed between the simulations of Figure 10 and Figure 11 is the presence of the flow inducer IND as part of the flow distributor $FD_1$, we can deduce that, by separating an incoming flow of reactant into two symmetric flows to feed the distribution chamber DC, the flow inducer is responsible of the high quality of the homogeneity of the flow of reactant with an electrolytic cell having a cell frame equipped with the flow distributor $FD_1$ comprising the flow inducer IND. The symmetry of reactant phase flow velocity between the right-hand side and the left-hand side of the electrolytic is especially worth of note.

Although the cell frame taken in example is presenting a circular shape, this does form a limitation and a cell frame according to the invention may present any practicable shape, such as a square or rectangular shape, such as in the configuration illustrated by figure 2.

In the detailed embodiment, the cell frame and the flow distributors $FD_0$ and $FD_1$ are presented as two distinct elements to be affixed to one another. However, the cell frame may be shaped so as incorporate a flow distributor in one piece. In both cases, it can be said that the cell framed is equipped with the flow distributor.

Also, the principle of the invention may be exploited for any type of electrochemical reaction, including electrolysis, such as pressurized or atmospheric electrolysis, which requires stacking electrolytic cells Ec, as represented on figure 1. Each of the features mentioned in this document can be freely combined within technical limits understood by the practitioner in the field of the invention.

Other variations to the disclosed examples can be understood and effected by those skilled in the art in practicing the claimed invention, from a study of the drawings, the disclosure, and the appended claims.

**Claims**

1. A flow distributor ($FD_1$) configured to be part of an electrolytic cell (Ec), the flow inducer comprising:

   - an elongated distribution chamber (DC);
   - an inner wall (InW) configured to separate the distribution chamber (DC) from an active area (AA) of the electrolytic cell (Ec), the inner wall (InW) comprising a plurality of channels (CH) configured to let flow some reactant from the distribution chamber to the active area (AA);
   - an outer wall (OutW), the distribution chamber (DC) being interposed between this outer wall (OutW) and the inner wall (InW); and
   - a duct (DUC) configured to bring a reactant to the distribution chamber (DC) through the outer wall (OutW),

   the flow distributer ($FD_1$) further comprising a flow inducer (IND) extending from the inner wall (InW) to an inside portion of the duct (DUC), separating the distribution chamber (DC) into a left-hand side distribution chamber (LHS-DC) and a right-hand side distribution chamber (RHS-DC), and forming a wall separating the duct (DUC) into two sides (RHS-DUC, LHS-DUC).

2. The flow distributor ($FD_1$) according to claim 1,

   wherein the duct (DUC) comprises a first portion (SP1), a second portion (SP2) that is a straight portion ending into the distribution chamber (DC), and a bent portion (BP) linking the first portion (SP1) to the second portion (SP2), and
   wherein the flow inducer extends to the first portion (SP1) through the second portion (SP2) and the bent portion (BP).

3. The flow distributor ($FD_1$) according to claim 2,
   wherein the first portion (SP1) is a straight portion.

4. The flow distributor ($FD_1$) according to claim 2,
   wherein the first portion (SP1) is oriented so as to make some reactant flow in a direction driving the reactant away from the distribution chamber (DC) toward the outer wall (OutW).

5. A cell frame (CF) configured to be part of an electrolytic cell (Ec), comprising:

   - an opening (Op) to form an inlet manifold ($In-M_1$); and
   - a distribution channel ($DistCh_1$) configured to bring some reactant from the inlet manifold ($In-M_1$) toward an inner periphery (IP) of the cell frame (CF),

   the cell frame (CF) being equipped with the flow distributor ($FD_1$) according to any one of claim 1 to claim 4, arranged so as to bring the reactant from the distribution channel ($DistCh_1$) to the distribution chamber (DC) through the duct (DUC).

6. The cell frame (CF) according to claim 5, wherein the distribution channel ($DistCh_1$) is formed at a given depth within the cell frame (CF).

7. An electrolyzer (ELEC) comprising a stack of electrolytic cells (Ec) each having a cell frame (CF) according to claim 5 or claim 6.

**Amended claims in accordance with Rule 137(2) EPC.**

1. A flow distributor (FD$_1$) configured to be part of an electrolytic cell (Ec), the flow distributor comprising:

   - an elongated distribution chamber (DC);
   - an inner wall (InW) configured to separate the distribution chamber (DC) from an active area (AA) of the electrolytic cell (Ec), the inner wall (InW) comprising a plurality of channels (CH) configured to let flow some reactant from the distribution chamber to the active area (AA);
   - an outer wall (OutW), the distribution chamber (DC) being interposed between this outer wall (OutW) and the inner wall (InW); and
   - a duct (DUC) configured to bring a reactant to the distribution chamber (DC) through the outer wall (OutW), the flow distributer (FD$_1$) further comprising a flow inducer (IND) extending from the inner wall (InW) to an inside portion of the duct (DUC), separating the distribution chamber (DC) into a left-hand side distribution chamber (LHS-DC) and a right-hand side distribution chamber (RHS-DC), and forming a wall separating the duct (DUC) into two sides (RHS-DUC, LHS-DUC).

2. The flow distributor (FD$_1$) according to claim 1,

   wherein the duct (DUC) comprises a first portion (SP1), a second portion (SP2) that is a straight portion ending into the distribution chamber (DC), and a bent portion (BP) linking the first portion (SP1) to the second portion (SP2), and

   wherein the flow inducer extends to the first portion (SP1) through the second portion (SP2) and the bent portion (BP).

3. The flow distributor (FD$_1$) according to claim 2,
   wherein the first portion (SP1) is a straight portion.

4. The flow distributor (FD$_1$) according to claim 2,
   wherein the first portion (SP1) is oriented so as to make some reactant flow in a direction driving the reactant away from the distribution chamber (DC) toward the outer wall (OutW).

5. A cell frame (CF) configured to be part of an electrolytic cell (Ec), comprising:

   - an opening (Op) to form an inlet manifold (In-M$_1$); and
   - a distribution channel (DistCh$_1$) configured to bring some reactant from the inlet manifold (In-M$_1$) toward an inner periphery (IP) of the cell frame (CF),

   the cell frame (CF) being equipped with the flow distributor (FD$_1$) according to any one of claim 1 to claim 4, arranged so as to bring the reactant from the distribution channel (DistCh$_1$) to the distribution chamber (DC) through the duct (DUC).

6. The cell frame (CF) according to claim 5, wherein the distribution channel (DistCh$_1$) is formed at a given depth within the cell frame (CF).

7. An electrolyzer (ELEC) comprising a stack of electrolytic cells (Ec) each having a cell frame (CF) according to claim 5 or claim 6.

Fig. 1

Fig. 2

Fig. 3

Fig. 4

In-R
DistCh₂  AA        Dp    D   CF    IP        DistCh₁
In-M₂                                        In-M₁

Fig. 5

Out-M₁                    CF
                                    FC
D
AA
                                    IP
FD₀
DUC   In-MC₁        DistCh₁

Fig. 6

Fig. 7

Fig. 8

Fig. 9

Fig. 10

Fig. 11

Europäisches
Patentamt

European
Patent Office

Office européen
des brevets

# EUROPEAN SEARCH REPORT

**Application Number**

EP 23 31 5388

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KR 2020 0024019 A (KOREA INST ENERGY RES [KR]) 6 March 2020 (2020-03-06) * the whole document *<br>- - - - - | 1-7 | INV.<br>C25B1/04<br>C25B9/60<br>C25B9/75 |
| A | US 2016/115603 A1 (GASHI REXHEP [CH] ET AL) 28 April 2016 (2016-04-28) * the whole document *<br>- - - - - | 1-7 | C25B9/77<br>C25B15/08 |

**TECHNICAL FIELDS SEARCHED (IPC)**

C25B

The present search report has been drawn up for all claims

| Place of search | Date of completion of the search | Examiner |
|---|---|---|
| Munich | 4 July 2024 | Thorner, Gentien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 31 5388

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2024

| Patent document cited in search report | Publication date | Patent family member(s) | Publication date |
|---|---|---|---|
| KR 20200024019 A | 06-03-2020 | NONE | |
| US 2016115603 A1 | 28-04-2016 | EP 3012892 A1 | 27-04-2016 |
| | | KR 20160048676 A | 04-05-2016 |
| | | US 2016115603 A1 | 28-04-2016 |
| | | ZA 201507424 B | 22-02-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6852205 B1
- US 6117287 A
- EP 3696298 A1